# FASCICULE DE BREVET EUROPEEN

(11) **EP 2 191 323 B1**
(45) Date de publication et mention de la délivrance du brevet: **12.11.2014**
(21) Numéro de dépôt: 08838403.7
(22) Date de dépôt: 28.07.2008
(51) Int. Cl.: G02C 7/04

(54) **LENTILLE DE CONTACT**
KONTAKTLINSE
CONTACT LENS

(30) Priorité: 19.09.2007 FR 0706572
(43) Date de publication de la demande: 02.06.2010
(73) Titulaire: Laboratoire Precilens, 75007 Paris (FR)
(72) Inventeur: PERRIN, Gérard, F-67380 Lingolsheim (FR)
(74) Mandataire: Gaillarde, Frédéric F. Ch.
(86) Numéro de dépôt international: PCT/FR2008/001125
(87) Numéro de publication internationale: WO 2009/047411

(56) Documents cités:
- EP-A- 0 742 462
- WO-A-03/009052
- GB-A- 1 252 288
- GB-A- 2 041 557
- US-A- 4 618 229
- US-A- 5 805 266
- US-A1- 2005 068 489
- US-A1- 2005 068 490

## Description

La présente invention se rapporte aux lentilles de contact et peut être utilisée pour différents types de lentilles devant se translater de bas en haut et/ou se stabiliser.

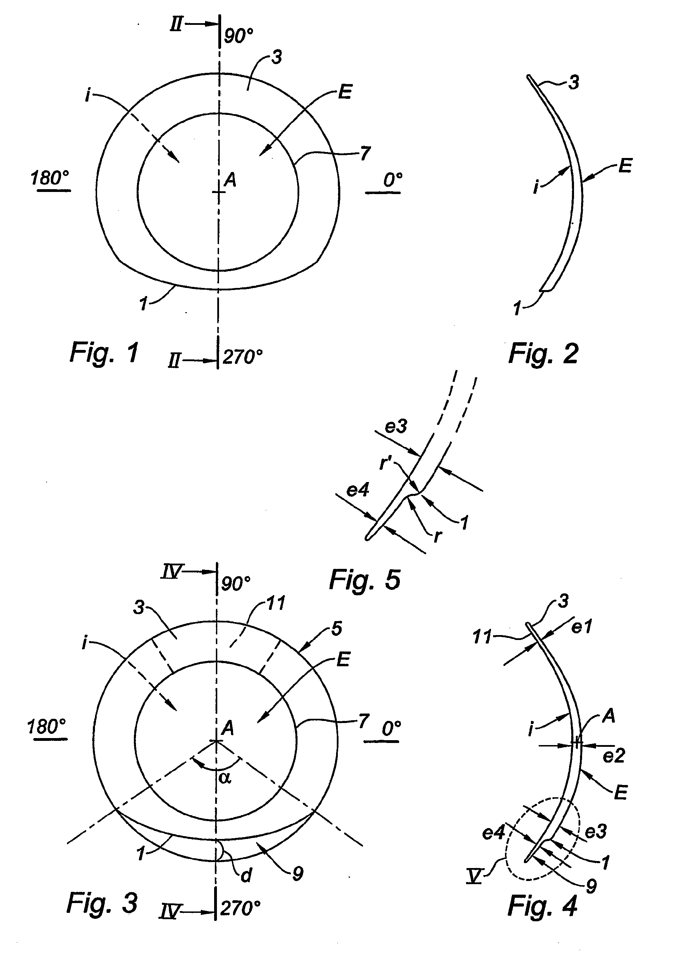

On connaît le principe de stabilisation des lentilles de contact avec appui inférieur, telles que celle qui est représentée sur les figures 1 et 2 ci-annexées.

Les termes « appui inférieur » indiquent que le bord inférieur 1 est suffisamment épais pour venir en butée contre le bord de la paupière inférieure, sans passer en dessous contrairement au bord supérieur 3 qui lui est « mince », c'est-à-dire adapté pour passer sous la paupière supérieure.

Du fait de la butée du bord inférieur de la lentille sur le bord de la paupière inférieure, on obtient la possibilité de faire translater la lentille vers le haut lors du regard vers le bas : on parle de « translation » de la lentille sur l'oeil.

Par ailleurs, du fait de cette différence d'épaisseur et donc de poids entre ses bords inférieur et supérieur, la lentille tend à conserver son orientation par rapport à l'oeil, c'est-à-dire à ne pas tourner par rapport à celui-ci : on dit que la lentille est « stabilisée ».

Ces caractéristiques de stabilisation et de translation permettent de réaliser des lentilles comportant différentes zones de corrections optiques, le passage de l'oeil de l'une à l'autre de ces différentes zones étant obtenu par mouvement de l'oeil de bas en haut ou de haut en bas.

De telles lentilles à zones de corrections multiples peuvent être notamment des lentilles à plusieurs foyers, utilisées pour la correction de la presbytie.

Pour accroître la translation de la lentille, il est connu d'en tronquer le bord inférieur 1, comme cela est visible sur la figure 1 ci-annexée : ce bord inférieur présente une courbe correspondant sensiblement à celle du bord de la paupière inférieure, constituant ainsi une sorte de méplat contribuant à limiter les risques de rotation de la lentille sur l'oeil et favorise donc la stabilisation.

Ces lentilles à appui inférieur, qui présentent une dissymétrie entre leurs parties supérieure et inférieure, se distinguent notamment des lentilles symétriques utilisées pour la correction de l'astigmatie, comme par exemple la lentille du document EP0742462.

Plus précisément, alors que ces lentilles à appui inférieur comportent un unique appui, disposé dans la partie inférieure de la lentille, les lentilles du type de celle qui est décrite dans EP0742462 présentent deux appuis symétriques permettant le maintien en position centrée de la lentille par rapport à l'oeil (aucune translation le la lentille par rapport à l'oeil n'est souhaitée).

Du fait de sa relative épaisseur, le bord inférieur des lentilles à appui inférieur peut créer un inconfort et une tolérance physiologique amoindrie.

La présente invention a notamment pour but d'améliorer le confort, la tolérance physiologique et la qualité de vision.

Le document US 2005/0068489 A1 divulgue une lentille de contact comprenant un décrochement sur sa face externe.

On atteint le but de l'invention avec une lentille de contact selon la revendication 1, comprenant au moins deux focales, un appui inférieur apte à permettre la translation de cette lentille par rapport à l'oeil, et une plage disposée dans la partie inférieure de la lentille, cette plage présentant une face externe reliée au reste de la face externe de la lentille par un décrochement et une face interne confondue avec le reste de la face interne de la lentille, ledit décrochement définissant ledit appui inférieur, cette lentille étant remarquable en ce que ladite plage est mince, c'est-à-dire qu'elle présente une épaisseur moyenne du même ordre de grandeur que l'épaisseur du bord supérieur de ladite lentille et comprenant de plus un dégagement sur sa face interne.

Par « un appui inférieur », on entend, dans le cadre de la présente invention, et comme cela a déjà été indiqué plus haut, «unique appui, disposé dans la partie inférieure de la lentille ».

Du fait de sa minceur, la plage inférieure de la lentille selon l'invention est apte à passer sous le bord de la paupière inférieure.

Ainsi, tandis que l'appui inférieur continue, comme dans la technique antérieure, de remplir sa fonction de butée contre le bord de la paupière inférieure, la plage inférieure mince permet, quant à elle, de rendre le bord inférieur de la lentille analogue à son bord supérieur, et ainsi de présenter le même niveau de compatibilité mécanique et physiologique avec l'oeil que ce bord supérieur.

Suivant d'autres caractéristiques optionnelles de la lentille selon l'invention :
- ledit décrochement est défini par une combinaison de rayons concaves et convexes ;
- ladite lentille est rigide, souple ou mixte (rigide + souple) ;
- ladite lentille souple présente un dégagement formé sur sa face interne et débouchant sur son bord supérieur : un tel dégagement favorise la translation de la lentille par le choix d'un rayon en adéquation avec celui du blanc de l'oeil et favorise la circulation des larmes ;
- ledit dégagement s'étend sur un secteur angulaire compris entre 40° et 140°, et sur une distance radiale variable ;
- ledit appui inférieur s'étend sur un secteur angulaire compris entre 200° et 340° : une telle extension angulaire permet une stabilisation optimale de la lentille ;
- la distance radiale prise à 270° séparant ledit appui inférieur du bord inférieur de ladite plage est comprise entre 0,2 et 1,5 mm ;
- le rapport entre les épaisseurs respectives de ladite lentille prises radialement juste à l'intérieur et radialement juste à l'extérieur dudit appui inférieur est compris entre 3 et 5 ;
- le diamètre de ladite lentille est compris entre 8 et 16 mm ;
- le rayon de courbure de la face interne de ladite lentille est compris entre 4 et 12 mm.

D'autres caractéristiques et avantages de la présente invention apparaîtront à la lumière de la description qui va suivre, et à l'examen des figures ci-annexées dans lesquelles :
- la figure 1 est une vue de face d'une lentille de la technique antérieure, telle que décrite dans le préambule de la présente description,
- la figure 2 est une vue en coupe selon la ligne II-II de la lentille de la figure 1,
- les figures 3 et 4 sont des vues respectivement analogues aux figures 1 et 2 d'une lentille selon l'invention, et
- la figure 5 est une vue de détail de la zone V de la figure 4.

Sur l'ensemble de ces figures, des références identiques ou analogues désignent des organes ou ensembles d'organes identiques ou analogues.

Comme on peut le voir sur les figures 1 et 3, il est courant de se repérer sur une lentille par des indications angulaires, les valeurs 0° et 180° désignant des parties de la lentille destinées à s'appliquer respectivement sur la gauche et la droite d'un oeil, et les valeurs 90° et 270° désignant des parties de cette lentille destinées à s'appliquer respectivement sur le haut et sur le bas de l'oeil.

Les termes « supérieur » et « inférieur » utilisés dans le cadre du présent brevet désignent les zones d'une lentille situées respectivement au voisinage des valeurs angulaires 90° et 270°.

Par « face interne », on désigne la face concave i de la lentille destinée à s'appliquer sur l'oeil, et par « face externe », on désigne l'autre face E de la lentille.

Comme on peut le voir sur la figure 3, le bord 5 de la lentille selon l'invention présente une forme généralement circulaire.

Le cercle défini par ce bord peut typiquement avoir un diamètre compris entre 8 et 16 mm.

On a représenté par le trait circulaire 7 la zone optiquement active de cette lentille, c'est-à-dire la zone de cette lentille destinée à être utilisée par l'oeil.

Le diamètre de cette zone optiquement active peut typiquement être situé entre 4 et 13 mm.

Le rayon de courbure de la face interne i de la lentille dépend bien évidemment de la courbure de l'oeil, et peut typiquement être compris entre 4 et 12 mm.

Comme cela est visible sur la figure 4, le bord supérieur 3 de la lentille est mince, c'est-à-dire adapté pour pouvoir passer entre l'oeil et la paupière supérieure, l'épaisseur e1 de ce bord supérieur pouvant typiquement être de l'ordre de 0,12 mm.

Dans l'exemple représenté, l'épaisseur de la lentille croît depuis son bord supérieur 3 jusqu'à son centre A, pour atteindre une épaisseur de l'ordre de 0,4 mm (lentille de puissance -3 dioptries) ; cette épaisseur varie ensuite entre le centre A de la lentille et l'appui inférieur 1 de la lentille, pour atteindre une valeur e3 de l'ordre de 0,6 mm dans la zone située radialement juste à l'intérieur de l'appui inférieur 1.

Une telle lentille, fournie à titre d'exemple illustratif et non limitatif, peut typiquement être une lentille à double focale, adaptée pour la correction de la presbytie.

A la différence de la lentille de l'art antérieur visible sur les figures 1 et 2, la lentille ne s'arrête pas à son appui inférieur 1 : cet appui est en effet prolongé vers le bas (c'est-à-dire vers la zone située à 270°) par une plage mince 9.

Par « plage mince » on entend une partie adaptée pour passer entre l'oeil et la paupière inférieure : l'épaisseur moyenne e4 de cette plage 9 est donc du même ordre de grandeur que l'épaisseur moyenne du bord supérieur 3, à savoir de l'ordre de 0,12 mm.

Le rapport entre les épaisseurs e3 et e4 peut typiquement être compris entre 3 et 5.

Tandis que la face interne de la plage mince 9 est identique au reste de la face interne i de la lentille, la face externe de cette plage 9 forme un décrochement par rapport au reste de la face externe E de la lentille : c'est ce décrochement défini selon une formule mathématique appropriée qui définit l'appui inférieur 1, adapté pour venir en butée sur le bord de la paupière inférieure.

Comme cela est visible sur la figure 5, ce décrochement présente des sections radiales à rayons r concaves et r' convexes, ces sections permettant le raccordement de la surface externe de la plage mince 9 avec la surface externe E de la lentille.

A noter qu'au voisinage des extrémités de ce décrochement, la concavité des rayons r et r' peut s'inverser par rapport à celle qui est représentée sur la figure 5.

Comme cela est visible sur la figure 3, la plage mince 9 peut typiquement présenter une extension angulaire α comprise entre 200° et 340°.

La lentille selon l'invention peut être une lentille rigide, une lentille souple ou une lentille mixte, c'est-à-dire comprenant à la fois des parties souples et rigides.

Une lentille rigide a un mouvement naturel vers le haut lorsque l'individu regarde vers le bas, ce qui n'est pas le cas en lentilles souple.

Pour améliorer ce mouvement de translation en lentille souple, on peut, selon le mode principal de réalisation de l'invention, réaliser un dégagement 11 sur la face interne du bord supérieur 3 de la lentille.

Un tel dégagement est obtenu par enlèvement de matière de la lentille, sur une plage angulaire pouvant typiquement être comprise entre 40° et 140°, et sur une distance radiale variable.

La lentille qui vient d'être décrite peut être réalisée au moyen de tours manométriques disponibles dans l'industrie spécialisée, tels que les tours de la gamme OPTOFORM commercialisés par la société STERLING.

Comme cela est connu en soi, la plage mince 9, le décrochement 1 et le dégagement 11 peuvent être obtenus au moyen d'outils coupants vibrant parallèlement à l'axe de la lentille, de manière dûment commandée.

La lentille selon l'invention peut également être obtenue par des procédés de moulage classiquement utilisés dans ce domaine technique.

Le mode d'utilisation et les avantages de la lentille selon l'invention résultent directement de la description qui précède.

Cette lentille est placée sur l'oeil d'un individu de manière que sa face interne i vienne au contact de cet oeil.

Du fait que le centre gravité de la lentille se trouve plus proche de la plage mince 9, la lentille s'oriente vers le bas de l'oeil.

Du fait des épaisseurs e3 et e4 adaptées, l'appui inférieur 1 vient en butée contre le bord de la paupière inférieure lorsque l'individu déplace son regard vers le bas.

Ce faisant, la plage mince 9 vient quant à elle se glisser entre l'oeil et la paupière inférieure.

La butée de l'appui inférieur 1 sur le bord de la paupière inférieure permet à l'oeil de défiler de haut en bas derrière la lentille, et donc d'utiliser les différentes zones de correction optique prévues sur cette lentille.

Pour que cette « translation » soit aisée dans le cas particulier où la lentille est souple, il est utile de prévoir le dégagement 11 qui permet de faciliter cette translation de la lentille vers le haut de l'oeil.

La minceur du bord supérieur 3 de la lentille permet à la paupière supérieure de recouvrir aisément la lentille, lorsque l'individu porteur cille des yeux.

On notera enfin que le fait que l'appui inférieur 1 présente une courbe correspondant sensiblement à celle du bord de la paupière inférieure, comme cela est visible sur la figure 3, permet à cette lentille de reposer de manière particulièrement stable sur le bord de la paupière inférieure, limitant ainsi, tout risque de rotation de cette lentille sur l'oeil.

On comprend donc à la lumière de ce qui précède que grâce à la présence de la plage mince 9, le bord inférieur de la lentille selon l'invention présente une géométrie analogue à celle de son bord supérieur, c'est-à-dire une faible épaisseur, nettement plus compatible avec l'oeil d'un point de vue mécanique et physiologique que les lentilles à bord inférieur épais de l'état de la technique.

Bien entendu, la présente invention n'est nullement limitée au mode de réalisation décrit et représenté, fourni à titre de simple exemple.

## Revendications

1. Lentille de contact comprenant au moins deux focales, uniquement un appui inférieur (1) apte à permettre la translation de cette lentille par rapport à l'oeil, et une plage (9) disposée dans la partie inférieure de la lentille, cette plage (9) présentant une face externe reliée au reste de la face externe (E) de la lentille par un décrochement et une face interne confondue avec le reste de la face interne (i) de la lentille, ledit décrochement définissant ledit appui inférieur (1), ladite plage (9) étant mince, c'est-à-dire qu'elle présente une épaisseur moyenne (e4) du même ordre de grandeur que l'épaisseur (e1) du bord supérieur (3) de ladite lentille, cette lentille étant **caractérisée en ce qu'**elle présente un dégagement (11) obtenu par enlèvement de matière de la lentille, formé sur sa face interne (i) et débouchant sur son bord supérieur (3), ce dégagement s'étendant sur un secteur angulaire compris entre 40° et 140°.

2. Lentille de contact selon la revendication 1, **caractérisée en ce que** ledit décrochement est défini par une combinaison de rayons concaves (r) et convexes (r').

3. Lentille selon l'une des revendications 1 ou 2, **caractérisée en ce qu'**elle est rigide, souple ou mixte.

4. Lentille selon l'une quelconque des revendications précédentes, **caractérisée en ce que** ledit appui inférieur (1) s'étend sur un secteur angulaire (α) compris entre 200° et 340°.

5. Lentille selon l'une quelconque des revendications précédentes, **caractérisée en ce que** la distance radiale (d) prise à 270° séparant ledit appui inférieur (1) du bord inférieur de ladite plage (9) est comprise entre 0,2 et 1,5 mm.

6. Lentille selon l'une quelconque des revendications précédentes, **caractérisée en ce que** le rapport entre les épaisseurs respectives (e3, e4) de ladite lentille prises radialement juste à l'intérieur et juste à l'extérieur dudit appui inférieur (1) est compris entre 3 et 5.

7. Lentille selon l'une quelconque des revendications précédentes, **caractérisée en ce que** son diamètre est compris entre 8 et 16 mm.

8. Lentille selon l'une quelconque des revendications précédentes, **caractérisée en ce que** le rayon de courbure de sa face interne (i) est compris entre 4 et 12 mm.

## Patentansprüche

1. Kontaktlinse, umfassend mindestens zwei Brennweiten, nur eine untere Auflage (1), die ausgelegt ist, um die Verschiebung dieser Linse mit Bezug auf das Auge zu ermöglichen, und einen Bereich (9), der sich am unteren Teil der Linse befindet, wobei dieser Bereich (9) eine Außenseite umfasst, die mit dem Reste der Außenseite (E) der Linse durch einen Rücksprung verbunden ist, und eine Innenseite, die dem Rest der Innenseite (i) der Linse angeglichen ist, wobei der Rücksprung die untere Auflage (1) definiert, wobei der Bereich (9) dünn ist, d.h. er weist eine mittlere Dichte (e4) im gleichen Größenbereich wie die Dicke (e1) des oberen Rands (3) der Linse auf, wobei diese Linse **dadurch gekennzeichnet ist, dass** sie einen Rücksprung (11) aufweist, der durch die Entfernung von Material von der Linse erhalten wird, das auf ihrer Innenseite (i) gebildet ist und auf dem oberen Rand (3) mündet, wobei sich dieser Rücksprung auf einem Winkelsektor erstreckt, der zwischen 40° und 140° liegt.

2. Kontaktlinse nach Anspruch 1, **dadurch gekennzeichnet, dass** der Rücksprung durch eine Kombination von konkaven (r) und konvexen (r') Radien definiert ist.

3. Linse nach einem der Ansprüche 1 oder 2, **dadurch gekennzeichnet, dass** sie starr, weich oder gemischt ist.

4. Linse nach einem der vorhergehenden Ansprüche, **dadurch gekennzeichnet, dass** sich die untere Auflage (1) auf einem Winkelsektor (α) erstreckt, der zwischen 200° und 340° liegt.

5. Linse nach einem der vorhergehenden Ansprüche, **dadurch gekennzeichnet, dass** der radiale Abstand (d), gemessen bei 270°, der die untere Auflage (1) vom unteren Rand des Bereichs (9) trennt, zwischen 0,2 und 1,5 mm liegt.

6. Linse nach einem der vorhergehenden Ansprüche, **dadurch gekennzeichnet, dass** der Bezug zwischen den entsprechenden Dicken (e3, e4) der Linse, radial gerade innen und gerade außen von der unteren Auflage (1) gemessen, zwischen 3 und 5 liegt.

7. Linse nach einem der vorhergehenden Ansprüche, **dadurch gekennzeichnet, dass** ihr Durchmesser zwischen 8 und 16 mm liegt.

8. Linse nach einem der vorhergehenden Ansprüche, **dadurch gekennzeichnet, dass** der Krümmungsradius seiner Innenseite (i) zwischen 4 und 12 mm liegt.

## Claims

1. A contact lens comprising at least two focal lengths, only a lower support (1) able to allow the translation of this lens relative to the eye, and an area (9) disposed in the lower portion of the lens, this area (9) having an outer face connected to the remainder of the outer face (E) of the lens by a step and an inner face merged with the remainder of the inner face (i) of the lens, said step defining said lower support (1), said area (9) being thin, that is to say it has an average thickness (e4) of the same order of magnitude as the thickness (e1) of the upper edge (3) of said lens, this lens being **characterized in that** it has a clearance (11) obtained by removing material from the lens, formed on its inner face (i) and opening at its upper edge (3), this clearance extending over an angular sector ranging between 40 ° and 140 °.

2. The contact lens according to claim 1, **characterized in that** said step is defined by a combination of concave (r) and convex (r') radii.

3. The lens according to any of claims 1 or 2, **characterized in that** it is rigid, flexible or mixed.

4. The lens according to any one of the preceding claims, **characterized in that** said lower support (1) extends over an angular sector (α) ranging between 200° and 340°.

5. The lens according to any one of the preceding claims, **characterized in that** the radial distance (d) taken at 270° separating said lower support (1) from the lower edge of said area (9) is ranging between 0.2 and 1.5 mm.

6. The lens according to any one of the preceding claims, **characterized in that** the ratio between the respective thicknesses (e3, e4) of said lens radially taken just inside and just outside said lower support (1) is ranging between 3 and 5.

7. The lens according to any one of the preceding claims, **characterized in that** its diameter is ranging between 8 and 16 mm.

8. The lens according to any one of the preceding claims, **characterized in that** the radius of curvature of its inner face (i) is ranging between 4 and 12 mm.
